# EUROPÄISCHE PATENTSCHRIFT

(11) **EP 0 723 244 B1**
(45) Veröffentlichungstag und Bekanntmachung des Hinweises auf die Patenterteilung: **02.05.2003**
(21) Anmeldenummer: 95120251.4
(22) Anmeldetag: 21.12.1995
(51) Int. Cl.: G06K 19/077

(54) **Datenträger mit einem elektronischen Modul**
Record carrier with an electronic module
Support d'information à module électronique

(30) Priorität: 23.12.1994 DE 4446369
(43) Veröffentlichungstag der Anmeldung: 24.07.1996
(73) Patentinhaber: Giesecke & Devrient GmbH, 81677 München (DE)
(72) Erfinder: Haghiri-Tehrani, Yahya, D-80797 München (DE); Hoppe, Joachim, D-81667 München (DE); Hohmann, Arno, D-81369 München (DE)
(74) Vertreter: Klunker . Schmitt-Nilson . Hirsch

(56) Entgegenhaltungen:
- EP-A- 0 570 062
- DE-A- 4 311 493
- FR-A- 2 701 139
- PATENT ABSTRACTS OF JAPAN vol. 018, no. 445 (P-1789), 18.August 1994 & JP 06 139421 A (NIPPON I D SYST KK;OTHERS: 01), 20.Mai 1994,
- PATENT ABSTRACTS OF JAPAN vol. 095, no. 009, 31.Oktober 1995 & JP 07 156582 A (DAINIPPON PRINTING CO LTD), 20.Juni 1995,
- PATENT ABSTRACTS OF JAPAN vol. 016, no. 331 (M-1282), 20.Juli 1992 & JP 04 094996 A (TOSHIBA CORP), 27.März 1992,

## Beschreibung

Die Erfindung betrifft einen mehrschichtigen Datenträger, der ein elektronisches Modul mit einem integrierten Schaltkreis und eine mit dem Schaltkreis leitend verbundene Spule umfaßt, wobei die Spule in einem Kanal des Kartenkörpers angeordnet ist. Darüber hinaus betrifft die Erfindung ein Halbzeug zum Einbau in einen solchen Datenträger und ein Herstellungsverfahren für einen solchen Datenträger.

Datenträger, in die ein elektronisches Modul eingebaut ist, sind bereits hinlänglich bekannt und werden als Kreditkarten, Bankkarten, Barzahlungskarten und dergleichen in den verschiedensten Dienstleistungssektoren, beispielsweise im bargeldlosen Zahlungsverkehr oder im innerbetrieblichen Bereich als Zugangsberechtigung verwendet. Die Energieversorgung des elektronischen Moduls und/oder der Datenaustausch mit externen Geräten erfolgt entweder berührend über äußere Kontaktflächen oder aber nichtberührend, beispielsweise induktiv über geeignete Spulen im Datenträger.

Die EP 0 570 062 beschreibt beispielsweise einen Datenträger, in dem ein berührungslos kommunizierendes elektronisches Modul, bestehend aus Spule und leitend damit verbundenem integrierten Schaltkreis angeordnet ist. Der Datenträger umfaßt drei Kartenschichten, die übereinander angeordnet sind. Die mittlere Schicht besteht aus einem ovalen Mittelteil, das eine Durchbrechung mit dem darin angeordneten integrierten Schaltkreis aufweist und zwei äußeren Teilen, die einen Rahmen um das ovale Teil bilden, so daß im Datenträger ein Kanal vorhanden ist, in dem sich die Spule befindet. Die äußeren Teile der mittleren Kartenschicht schließen mit den anderen Kartenschichten des Datenträgers bündig ab.

Ein derartiger Datenträger mit vielen Einzelteilen, die alle unterschiedliche Abmaße aufweisen, ist relativ schwierig herzustellen, da sich die Positionierung derartiger Einzelteile relativ schwierig gestaltet.

Ein anderer Datenträger mit elektronischem Modul ist aus der WO 92/21105 bekannt. Der Datenträger besteht aus mehreren übereinander laminierten Kartenschichten. Eine der Kernschichten hat geeignete Vertiefungen in Form von Sacklöchern zur Aufnahme des integrierten Schaltkreises und der mit dem Schaltkreis leitend verbundenen Spule. Obwohl die Herstellung der Vertiefungen nicht näher beschrieben ist, dürfte deren Herstellung relativ aufwendig sein, da diese Kartenschichten im allgemeinen eine sehr geringe Dicke aufweisen.

Aus der JP-A-06/139 421 ist weiterhin eine kontaktlose Karte bekannt, welche ein elektronisches Modul bestehend aus einem integrierten Schaltkreis und einer Spule enthält, welche innerhalb des Kartenkörpers in der Aussparung eines Trägerelements angeordnet sind, bekannt.

Die EP-A- 723245 der Selben Anmelderin betrifft ebenfalls das Gebiet der voliegenden Anmeldung.

Ausgehend von dem genannten Stand der Technik liegt der Erfindung deshalb die Aufgabe zugrunde, einen Datenträger obengenannter Art vorzuschlagen, der gerade bei großen Stückzahlen auf einfache Art und Weise herstellbar ist.

Die Aufgabe wird durch die in den Ansprüchen angegebenen Merkmale gelöst.

Der Grundgedanke der Erfindung ist darin zu sehen, daß der Kanal zur Aufnahme wenigstens der Spule durch wenigstens eine Durchbrechung in wenigstens einer Kartenschicht gebildet wird, wobei die Durchbrechung so vorgesehen ist, daß bei der Herstellung des Datenträgers ausschließlich zusammenhängende Kartenschichten verwendet werden, die die Abmaße des Datenträgers aufweisen. Vorzugsweise werden die Durchbrechungen in den Kartenschichten durch Stanzen gefertigt.

Hieraus. ergeben sich einige wesentliche Vorteile. Durch die Tatsache, daß der Datenträger nur aus Kartenschichten aufgebaut ist, die die Abmaße des Datenträgers auf-weisen, kann als Ausgangsprodukt für die Herstellung der Datenträger Rollenmaterial verwendet werden. Andererseits beschränkt sich die Herstellung des Kanals im Datenträger auf das Ausstanzen von geeigneten Durchbrechungen in einzelnen Kartenschichten, wodurch ein aufwendiges Herstellen von Einzelteilen vermieden wird.

In einem Datenträger gemäß einer ersten Ausführungsform weisen zwei der Kartenschichten Durchbrechungen auf, so daß sich durch das Übereinanderliegen der zwei Kartenschichten im Datenträger der Kanal ergibt. Im Kanal ist zumindest die Spule untergebracht. Der Datenträger kann wahlweise in einer oder mehreren Kartenschichten zusätzliche Durchbrechungen zur Aufnahme des integrierten Schaltkreises aufweisen.

In einer zweiten Ausführungsform des erfindungsgemäßen Datenträgers wird der Kanal durch wenigstens eine Durchbrechung in nur einer Kartenschicht gebildet. Der Kanal ist hierbei nicht vollständig ausgestanzt und ist durch mindestens einen Steg unterbrochen, der den innerhalb des Kanals liegenden Bereich der Kartenschicht mit dem außerhalb des Kanals liegenden Bereich der Kartenschicht verbindet. Der/die verbindenden Stege weisen nicht die gesamte Dicke der Kartenschicht auf, um hierdurch im Datenträger einen Hohlraum zur Aufnahme der Spule zu schaffen. Die Größe der den Kanal bildenden Durchbrechungen kann hierbei variiert werden, so daß auch sehr kleine Durchbrechungen in Form einer Perforation für den Kanal vorgesehen sein können. Es können gleichfalls auch mehrere Durchbrechungen nebeneinander angeordnet werden. Natürlich kann auch die Dicke der Stege variiert werden, so daß die Stege auch in Form von sehr dünnen Membranen vorgesehen werden können. Zusätzlich kann in einer oder mehreren Kartenschichten eine Durchbrechung zur Aufnahme des integrierten Schaltkreises gefertigt werden.

In einer dritten Ausführungsform befindet sich in nur einer Kartenschicht ein vollständig ausgestanzter Kanal, der keine Stege aufweist. Die Herstellung eines derartigen Datenträgers ergibt sich wie folgt. Es wird auf einer ersten Kartenschicht ein Trennmittel, wie beispielsweise Silikon, in demjenigen Bereich aufgebracht, in dem sich der auszustanzende Kanal zur Aufnahme wenigstens der Spule befindet. Die erste Kartenschicht wird daraufhin auf eine zweite Kartenschicht aufkaschiert. Das aufgetragene Trennmittel verhindert hierbei ein Verkleben der Kartenschichten im Bereich des Trennmittels. Der Kanal wird daraufhin aus einer der Kartenschichten ausgestanzt, so daß die jeweils andere Kartenschicht nicht verletzt wird.

Vorzugsweise werden die elektronischen Module, bestehend aus Spule und integriertem Schaltkreis, in Form von sogenannten Halbzeugen auf Trägerschichten angeordnet, die eine Handhabung der elektronischen Module bei der Kartenfertigung erleichtert.

In einer ersten Ausführungsform des Halbzeugs wird das elektronische Modul auf einer Trägerschicht derart angeordnet, daß die Spule teilweise oberhalb sowie teilweise unterhalb der Trägerschicht verläuft. Dies wird dadurch erreicht, indem in die Trägerschicht mindestens eine Lasche gestanzt wird, wobei ein Teil der Spule unter die Lasche geführt wird und die Lasche die Spule an dieser Stelle festklemmt. Ein derartiges Halbzeug eignet sich bevorzugt zum Einbau in die erste Ausführungsform des oben beschriebenen Datenträgers, wobei die Durchbrechungen in den beiden Schichten, die gemeinsam den Kanal ergeben, so gefertigt sind, daß die oberhalb bzw. unterhalb der Trägerschicht verlaufenden Bereiche der Spule in dem Kanal untergebracht sind.

In einer zweiten Weiterbildung kann das elektronische Modul auf einer Trägerschicht aus einem thermoplastischen Kunststoff, der einen niedrigeren Erweichungspunkt als die restlichen Kartenschichten aufweist, wie beispielsweise Polyethylen, angeordnet sein. Ein solches Halbzeug kann in allen Ausführungsformen des Datenträgers eingebaut werden. Es hat neben der guten Positionierbarkeit weiterhin den Vorteil, daß beim Aufkaschieren weiterer Kartenschichten unter Druck und Wärme die Trägerschicht erweicht und in den Kanal eindringt, um hierdurch die Spule zusätzlich vor mechanischen Belastungen zu schützen. Natürlich kann das elektronische Modul auch zwischen zwei Trägerschichten aus besagtem thermoplastischen Kunststoff eingebettet sein.

Die Dicke des Datenträgers wird jedoch durch die zusätzlichen Trägerschichten erhöht. Da es jedoch wünschenswert ist, den Spulenkanal zumindest teilweise mit Kunststoff zu befüllen, um die Spule besser gegen mechanische Belastungen zu schützen, ist es gemäß einer Weiterbildung des Halbzeugs auch möglich, ausschließlich den Spulendraht zumindest teilweise mit einem thermoplastischen Kunststoff zu unterlegen bzw. zu umhüllen, dessen Erweichungspunkt unterhalb dem der restlichen Kartenschichten liegt. Ein derartiges Halbzeug kann ebenfalls in allen drei Ausführungsformen der eingangs beschriebenen Datenträger verwendet werden.

Weitere Vorteile und Weiterbildungen ergeben sich aus der Beschreibung, den Unteransprüchen sowie aus den Figuren, die nachfolgend erläutert werden.

Darin zeigen:
- Fig. 1: Aufriß eines Datenträgers mit einem elektronischen Modul,
- Fig. 2: Explosionszeichnung einer ersten Ausführungsform eines erfindungsgemäßen Datenträgers, bei dem der Kanal von zwei aufeinanderliegenden Kartenschichten gebildet wird,
- Fig. 3: perspektivische Darstellung einer zweiten Ausführungsform eines Datenträgers mit einer Kernschicht mit einem Kanal, wobei der Kanal durch Stege unterbrochen ist,
- Fig. 4: perspektivische Darstellung einer dritten Ausführungsform eines Datenträgers mit einem aus zwei Kartenschichten bestehen- den Kartenverbund im Schnitt, bei dem aus der oberen Kartenschicht der Kanal ausgestanzt ist,
- Fig. 5: Auffüllen des Kanals gemäß Fig. 4 mit einer Vergußmasse,
- Fig. 6: ein Halbzeug, wobei eine Spule durch Laschen auf einer Trägerschicht festgeklemmt wird,
- Fig. 7: ein weiteres Halbzeug, welches auf einer Trägerschicht aus Polyethylen aufliegt,

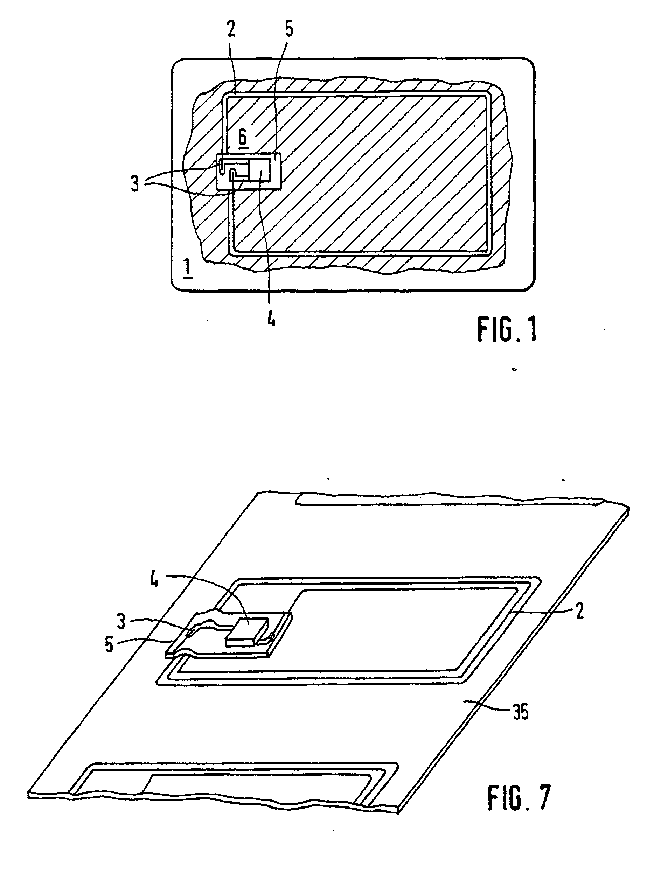

Fig. 1 zeigt den Aufriß eines Datenträgers mit einem eingebauten elektronischen Modul 6.

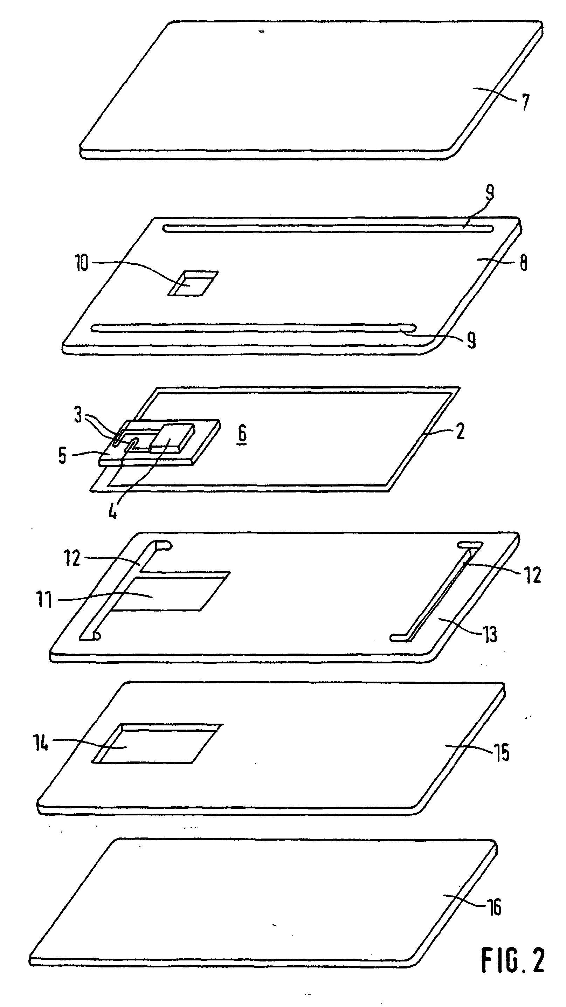

Fig. 2 zeigt die Explosionszeichnung einer ersten Ausführungsform eines perspektivisch dargestellten erfindungsgemäßen Datenträgers. Der Datenträger umfaßt ein elektronisches Modul 6 sowie die Kartenschichten 7, 8, 13, 15, 16. Das elektronische Modul 6 umfaßt ein isolierendes Substrat 5, auf dem sich die Leiterbahnen 3 befinden. Die Leiterbahnen können durch ein chemisches Ätzverfahren einer auf dem isolierenden Trägersubstrat 5 abgeschiedenen Metallschicht hergestellt sein. Mit den Enden der Leiterbahnen 3 ist einerseits der integrierte Schaltkreis 4 sowie andererseits die Spule 2 leitend verbunden. Die Kartenschichten 8 und 13 weisen Durchbrechungen 9 und 12 auf, so daß sich beim Übereinanderlegen der Kartenschichten 8 und 13 ein Kanal ergibt, in dem die Spule 2 eingebettet ist. Zusätzlich weisen die Kartenschichten 8, 13, 15 die Durchbrechungen 10, 11, 14 auf, um hierin das Trägersubstrat 5 und den integrierten Schaltkreis 4 unterbringen zu können. Die Kartenschichten sind durch die dem Fachmann hinreichend bekannte Kaschiertechnik miteinander verbunden.

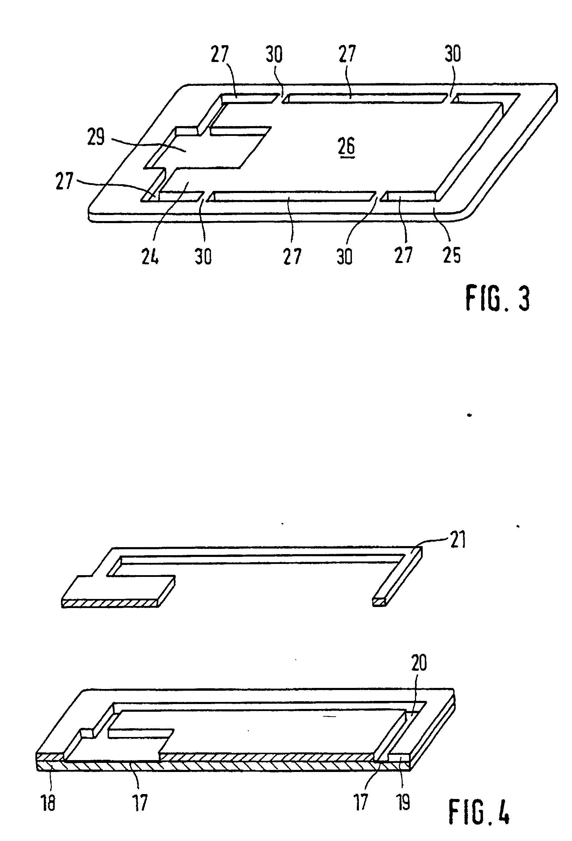

Fig. 3 zeigt eine perspektivische Darstellung der Kernschicht einer zweiten Ausführungsform eines erfindungsgemäßen Datenträgers. Die Kernschicht 26 weist hierbei Durchbrechungen 27 und 29 zur Aufnahme des elektronischen Moduls 6 auf. Die Durchbrechungen sind so gefertigt, daß das innerhalb des Kanals liegende Material 24 der Kartenschicht 26 mit dem außerhalb des Kanals liegenden Material 25 über Stege 30 verbunden ist. Zum Einbau des elektronischen Moduls 6 in den Datenträger wird das Trägersubstrat 5 in der Durchbrechung 29 plaziert sowie die Spule 2 in den Durchbrechungen 27, so daß nur noch die Spule 2 im Bereich der Stege 30 sich außerhalb der Ebene der Kartenschicht 26 befindet. Zur Fertigstellung der Karte wird von beiden Seiten eine Kartenschicht unter Druck und Wärme aufgebracht, so daß die Stege 30 unter der Erhitzung schmelzen und zerfließen, wodurch auch im Bereich der Stege 30 Raum zur Aufnahme der Spule 2 geschaffen wird. Da in der Durchbrechung 29 sowohl das Trägersubstrat 5 wie auch der integrierte Schaltkreis 4 des elektronischen Moduls 6 untergebracht werden müssen, muß die Dicke der Kartenschicht 26 der Modulhöhe angepaßt sein. Selbstverständlich kann die Kartenschicht 26 auch aus mehreren übereinanderliegenden Kartenschichten bestehen, deren Durchbrechungen genauer an die Konturen der Spule 2, das Trägersubstrat 5 und den integrierten Schaltkreis 4 angepaßt sind.

Fig. 4 zeigt in einer perspektivischen Darstellung den Schnitt eines aus den Kartenschichten 18 und 19 bestehenden Kartenverbundes, bei dem aus der Schicht 19 der Kanal 20 zur Aufnahme des elektronischen Moduls 6 ausgestanzt ist. Die Herstellung des aus den Kartenschichten 18 und 19 bestehenden Kartenverbundes geschieht wie folgt. Auf einer der beiden Kartenschichten 18 oder 19 wird in demjenigen Bereich, in dem hinterher der Kanal entstehen soll, ein Trennmittel, wie beispielsweise Silikon, aufgetragen und ausgehärtet. Danach wird die andere Schicht mit einem Kleber beschichtet und in einem Kaschierverfahren mit der anderen Schicht verklebt, wobei die beiden Kartenschichten in dem Bereich, in dem das Trennmittel aufgetragen ist, nicht miteinander verkleben. Mit einem Stanzwerkzeug wird aus einer der beiden Kartenschichten Material 21 ausgestanzt und entfernt, so daß der Kanal 20 entsteht. Die Entfernung des ausgestanzten Materials 21 kann durch eine Hebeeinrichtung bewerkstelligt werden, die sich durch eine Saugeinrichtung am ausgestanzten Material 21. festsaugt und dieses aus der Kartenschicht heraushebt.

Der Datenträger wird fertiggestellt, indem das elektronische Modul 6 in den Kanal 20 eingebettet wird und eine Deckschicht darüber kaschiert wird. Auch in dieser Ausführungsform muß die Kartenschicht 19 eine Dicke aufweisen, die der Dicke des elektronischen Moduls 6 entspricht. Die Kartenschicht 19 kann selbstverständlich auch aus mehreren Schichten aufgebaut sein.

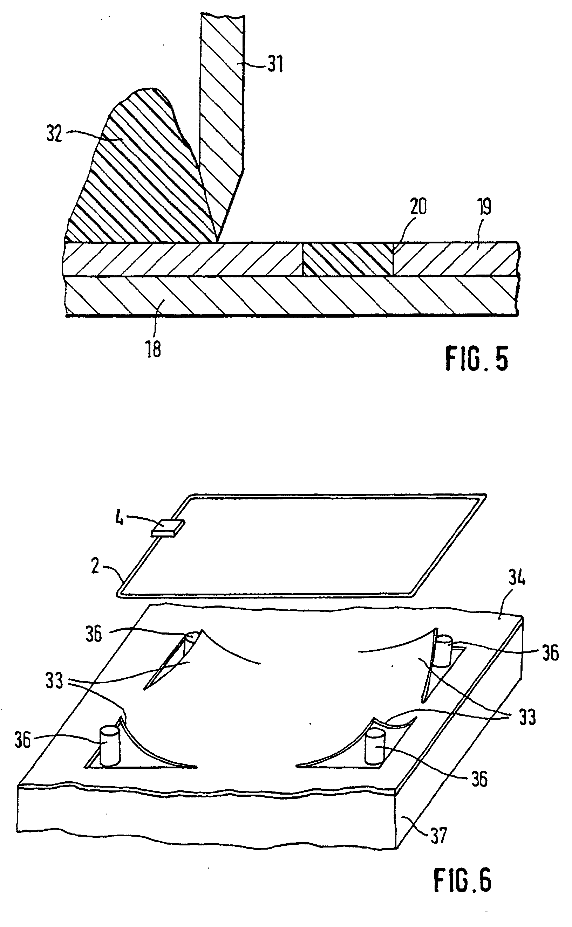

Die Spule 2 sowie auch der integrierte Schaltkreis 4 können in einer dritten Ausführungsform des Datenträgers besonders gut gegen mechanische Belastungen durch Verbiegung des Kartenkörpers geschützt werden, indem der verbleibende Raum im Kanal 20 mit einem thermoplastischen Kunststoff 32 aufgefüllt wird, dessen Erweichungspunkt niedriger als der der übrigen Kartenschichten ist, wie dies Fig. 5 zeigt. Hierbei wird durch eine Rakel 31 der flüssige Kunststoff 32 über die Oberfläche der Kartenschicht 19 gezogen. Dies ist besonders leicht möglich, da die Kartenschichten 18 und 19 bei der Herstellung üblicherweise in Form von langen Bändern vorliegen und diese Bänder zwischen zwei, hier nicht gezeigten, Führungswänden hindurchgezogen werden, wobei die Rakel 31 zwischen den Führungswänden angeordnet ist, um die Vergußmasse 32 von der Kartenschicht 19 abzustreifen.

Um die Positionierung des elektronischen Moduls zu vereinfachen, kann dieses vor dem Einbau auf einer Trägerschicht angeordnet sein.

In einer ersten Ausführungsform eines solchen Halbzeuges nach Fig. 6 kann das elektronische Modul, in dieser Ausführungsform beispielhaft lediglich bestehend aus einer Spule 2, deren Spulenenden direkt mit dem integrierten Schaltkreis 4 leitend verbunden sind, auf einer Trägerschicht 34 so angeordnet sein, daß die Spule 2 durch die Laschen 33 auf der Trägerschicht 34 festgeklemmt wird. Die Trägerschicht 34 wird hierbei in Form eines langen Bandes aus flexiblem Material, z. B. Kunststoffband, bereitgestellt und erst direkt vor dem Einbau des Halbzeuges in den Datenträger entsprechend abgelängt. Die Montage des elektronischen Moduls auf der Trägerschicht 34 erfolgt wie folgt. Mit einem geeigneten Stanzwerkzeug werden die Laschen 33 in die Trägerschicht 34 gestanzt. Die Trägerschicht 34 wird daraufhin auf die in Fig. 6 gezeigte Vorrichtung aufgesetzt, die eine Grundplatte 37 aufweist, auf der vier Metallstifte 36 befestigt sind. Die vier Metallstifte 36 sind derart angeordnet, daß beim Auflegen der Trägerschicht 34 die Laschen 33 nach oben gebogen werden. Das elektronische Modul wird nun so aufgesetzt, daß es die vier Metallstifte 36 der Vorrichtung umschließt und auf der Trägerschicht 34 aufliegt. Die Trägerschicht 34 kann nun von der Vorrichtung abgezogen werden, wobei sich die Laschen 33 über die Spule 2 legen.

In einer besonders vorteilhaften Weise kann das auf der Trägerschicht 34 fixierte elektronische Modul in einen Datenträger der ersten Ausführungsform eingebaut werden. Die Durchbrechungen in den beiden Schichten, die gemeinsam den Kanal ergeben, müssen hierbei so ausgebildet sein, daß sie jeweils die oberhalb bzw. unterhalb der Trägerschicht 34 liegenden Teile der Spule 2 aufnehmen.

Eine zweite Ausführungsform eines Halbzeuges zeigt Fig. 7. Hierin wird ein elektronisches Modul auf einer Trägerschicht 35 aus einem thermoplastischen Kunststoff, dessen Erweichungspunkt niedriger ist als der der restlichen Kartenschichten, wie beispielsweise Polyethylen, mit einem Kleber fixiert. Das hier beispielhaft gezeigte elektronische Modul unterscheidet sich von dem obengenannten dadurch, daß die Spulenenden der Spule 2 rechts und links vom integrierten Schaltkreis 4 mit den Leiterbahnen 3 leitend verbunden sind. Darüber hinaus werden die restlichen Spulenwindungen der Spule 2 auf der dem integrierten Schaltkreis 4 gegenüberliegenden Seite des Trägersubstrats 5 durchgeführt. Die Trägerschicht 35 ist hierbei in Form eines langen Bandes gezeigt, welches sich zum Transport hervorragend eignet. Das Band wird erst kurz vor dem Einbau der Halbzeuge in die Datenträger geeignet abgelängt. Das hier gezeigte Halbzeug kann in vorteilhafter Weise in die zweite und dritte Ausführungsform eines erfindungsgemäßen Datenträgers eingebaut werden. Der Einbau gestaltet sich analog zu demjenigen in oben beschriebener Weise. Die Verwendung eines derartigen Moduls ist besonders vorteilhaft, weil bei einem Verkleben des Kartenkörpers mit Wärme und Druck die Polyethylenschicht 35 flüssig wird und hierbei die Spule 2 im Kanal umgibt. Hierdurch kann ein guter zusätzlicher Schutz der Spule 2 gegenüber mechanischen Belastungen bei Verbiegung des Datenträgers erzielt werden.

Selbstverständlich kann das in Fig. 7 gezeigte elektronische Modul auch zwischen zwei Schichten aus Polyethylen eingeschweißt sein. Dies hat den besonderen Vorteil, daß das elektronische Modul beidseitig vor mechanischen Belastungen geschützt ist und somit auch sicher vom Hersteller des Moduls zu einem Kartenhersteller transportiert werden kann. Darüber hinaus ergibt sich gleichzeitig ein besserer Schutz der Spule im Datenträger gegenüber Biegebeanspruchungen.

Natürlich können auch gemäß einer dritten, hier nicht gezeigten, Weiterbildung eines Halbzeuges lediglich die Spulendrähte 2 des elektronischen Moduls mit Polyethylen von einer Seite unterlegt bzw. beidseitig umhüllt werden. Ein derartiges elektronisches Modul ist in allen drei Ausführungsformen zur Herstellung des erfindungsgemäßen Datenträgers verwendbar. Hierbei ergibt sich der besondere Vorteil darin, daß einerseits die Spulendrähte im Datenträger vor mechanischen Belastungen geschützt sind, aber andererseits die Dicke des Datenträgers nicht durch eine zusätzliche Schicht erhöht wird.

Selbstverständlich ist die Erfindung nicht auf die obengenannten Ausführungsbeispiele beschränkt. Vielmehr sollen auch Mischformen der einzelnen Komponenten erfaßt werden.

## Patentansprüche

1. Mehrschichtiger kartenförmiger Datenträger, der ein elektronisches Modul mit einem integrierten Schaltkreis (4) und eine mit dem Schaltkreis leitend verbundene Spule (2) umfaßt, wobei zumindest die Spule (2) in einem Kanal (9, 12, 27) des Datenträgers angeordnet ist, **dadurch gekennzeichnet, daß** wenigstens eine Kartenschicht zur Bildung des Kanals für zumindest die Spule wenigstens eine Durchbrechung durch die gesamte Dicke der Schicht in der Form aufweist, daß die Schicht als zusammenhängende Schicht mit den Abmessungen des Datenträgers erhalten bleibt.

2. Datenträger nach Anspruch 1, **dadurch gekennzeichnet, daß** die Durchbrechungen (9, 12) in zwei Kartenschichten (8, 13) des Datenträgers derart vorgesehen sind, daß sich durch das Übereinanderliegen der zwei Kartenschichten der Kanal ergibt.

3. Datenträger nach Anspruch 1, **dadurch gekennzeichnet, daß** die Durchbrechung in nur einer Kartenschicht des Datenträgers derart vorgesehen ist, daß der Kanal durch mindestens einen Steg (30) unterbrochen ist, wobei der Steg den außerhalb des Kanals liegenden Bereich (25) der Kartenschicht (26) mit dem innerhalb liegenden Bereich (24) der Kartenschicht (26) verbindet.

4. Datenträger nach Anspruch 1 - 3, **dadurch gekennzeichnet, daß** sich zumindest in einem Teilbereich des Kanals ein thermoplastischer Kunststoff befindet, dessen Erweichungspunkt niedriger als der der übrigen Kartenschichten ist.

5. Datenträger nach Anspruch 1 - 4, **dadurch gekennzeichnet, daß** mindestens eine Kartenschicht zusätzlich eine Durchbrechung (10) zur Aufnahme des integrierten Schaltkreises enthält.

6. Halbzeug bestehend aus wenigstens einer Schicht zum Einbau in einen Datenträger gemäß Anspruch 1, mit einem elektronischen Modul, umfassend einen integrierten Schaltkreis (4) und eine mit dem Schaltkreis leitend verbundene Spule (2),
**gekennzeichnet durch** wenigstens eine Durchbrechung **durch** die gesamte Dicke wenigstens einer Schicht des Halbzeugs zur Bildung des Kanals für zumindest die Spule, wobei die Schicht eine zusammenhängende Schicht mit den Abmessungen des Datenträgers ist.

7. Verfahren zur Herstellung eines mehrschichtigen kartenförmigen Datenträgers für den berührungslosen Datenaustausch, **gekennzeichnet durch** folgende Verfahrensschritte:
- Aufbringen eines Trennmittels auf einer ersten Kartenschicht im Bereich eines auszustanzenden Kanals,
- Aufkaschieren einer zweiten Kartenschicht auf diejenige Seite der ersten Kartenschicht, auf der sich das Trennmittel befindet,
- Durchstanzen einer der beiden Kartenschichten bis zu dem Trennmittel, so daß in dieser Kartenschicht die Kontur des Kanals entsteht und die jeweils andere Kartenschicht nicht verletzt wird,
- Entfernen des zwischen den Stanzkanten liegenden Materials aus der Kartenschicht, so daß in dieser der Kanal entsteht,
- Einbetten eines elektronischen Moduls, umfassend einen integrierten Schaltkreis und eine leitend mit dem Schaltkreis verbundene Spule in den Kanal,
- Aufkaschieren einer dritten Kartenschicht, so daß der Kanal von dieser bedeckt wird.

8. Verfahren nach Anspruch 7, **dadurch gekennzeichnet, daß** zusätzlich mit einer Rakel nach dem Einbetten des elektronischen Moduls eine flüssige Vergußmasse über die Kartenoberfläche gestreift wird, so daß der Kanal zumindest teilweise mit der Vergußmasse aufgefüllt ist.

## Claims

1. A multilayer card-shaped data carrier including an electronic module with an integrated circuit (4) and a coil (2) electrically connected with the circuit, at least the coil (2) being disposed in a channel (9, 12, 27) in the data carrier, **characterized in that** at least one card layer has at least one opening through the total thickness of the layer for forming the channel for at least the coil in such a way that the layer is retained as a cohesive layer with the dimensions of the data carrier.

2. A data carrier according to claim 1, **characterized in that** the openings (9, 12) are provided in two card layers (8, 13) of the data carrier in such a way that the superimposition of the two card layers yields the channel.

3. A data carrier according to claim 1, **characterized in that** the opening is provided in only one card layer of the data carrier in such a way that the channel is interrupted by at least one bar (30), the bar connecting the area (25) of the card layer (26) located outside the channel with the area (24) of the card layer (26) located within.

4. A data carrier according to claims 1 to 3, **characterized in that** a thermoplastic material whose softening point is lower than that of the remaining card layers is located at least in a partial area of the channel.

5. A data carrier according to claims 1 to 4, **characterized in that** at least one card layer additionally contains an opening (10) for receiving the integrated circuit.

6. A semifinished product consisting of at least one layer for installation in a data carrier according to claim 1 with an electronic module comprising an integrated circuit (4) and a coil (2) electrically connected with the circuit, **characterized by** at least one opening through the total thickness of at least one layer of the semifinished product for forming the channel for at least the coil, the layer being a cohesive layer with the dimensions of the data carrier.

7. A method for producing a multilayer card-shaped data carrier for noncontacting data exchange, **characterized by** the following method steps:
- applying a parting agent to a first card layer in the area of a channel to be stamped out,
- laminating a second card layer on the side of the first card layer on which the parting agent is located,
- stamping through one of the two card layers up to the parting agent so that the contour of the channel arises in this card layer and the other card layer is not damaged,
- removing the material located between the punching edges from the card layer so that the channel arises in said layer,
- embedding in the channel an electronic module comprising an integrated circuit and a coil electrically connected with the circuit,
- laminating on a third card layer so that the channel is covered by said layer.

8. A method according to claim 7, **characterized in that** a liquid casting compound is additionally spread over the card surface with a doctor blade after the electronic module is embedded so that the channel is filled at least partly with the casting compound.

## Revendications

1. Support de données multicouches sous forme de carte, comportant un module électronique avec un circuit intégré (4) et une bobine (2) connectée à ce circuit intégré, au moins la bobine (2) étant disposée dans un canal (9, 12, 27) du support de données, **caractérisé en ce qu'**au moins une couche de carte destinée à la formation du canal pour au moins la bobine, présente au moins une perforation à travers toute l'épaisseur de la couche, de sorte que la couche reste unie et présente les dimensions du support de données.

2. Support de données selon la revendication 1, **caractérisé en ce que** les perforations (9, 12) sont prévues dans deux couches de carte (8, 13) du support de données, de sorte que le canal résulte de la superposition des deux couches.

3. Support de données selon la revendication 1, **caractérisé en ce que** la perforation dans seulement une couche de carte du support de données est prévue de sorte que le canal soit interrompu par au moins une entretoise (30), l'entretoise reliant la partie située à l'extérieur du canal (25) de la couche de carte (26) à la partie située à l'intérieur (24) de la couche de carte (26).

4. Support de données selon les revendications 1 à 3, **caractérisé en ce qu'**au moins une partie du canal contient un matériau synthétique thermoplastique dont le point de ramollissement est inférieur à celui des autres couches de la carte.

5. Support de données selon les revendications 1 à 4, **caractérisé en ce qu'**au moins une couche de la carte contient en outre une perforation (10) pour le logement du circuit intégré.

6. Demi-produit composé d'au moins une couche pour le montage dans un support de données conformément à la revendication 1, avec un module électronique comportant un circuit intégré (4) et une bobine (2) connectée par conduction à ce circuit intégré, **caractérisé en ce qu'**au moins une perforation à travers toute l'épaisseur d'au moins une couche du demi-produit forme le canal pour au moins la bobine, la couche étant unie et présentant les dimensions du support de données.

7. Procédé pour la fabrication d'un support de données multicouches sous forme de carte pour l'échange de données sans contact, **caractérisé par** les étapes de procédé suivantes :
application d'un agent séparateur sur une première couche de la carte à l'endroit d'un canal à découper,
contrecollage d'une deuxième couche de carte sur le coté de la première couche de carte sur lequel se trouve l'agent séparateur,
découpage de l'une des deux couches de carte jusqu'à l'agent séparateur, de sorte que le contour du canal apparaisse dans cette couche de carte sans endommager l'autre couche respective,
enlèvement du matériau situé entre les arêtes de découpage de la couche de la carte, de manière à ce qu'un canal se forme dans celle-ci,
insertion d'un module électronique, comprenant un circuit intégré et une bobine connectée par conduction au circuit intégré dans le canal,
contrecollage d'une troisième couche, de façon à recouvrir le canal par celle-ci.

8. Procédé suivant la revendication 7, **caractérisé en ce qu'**après l'insertion du module électronique, une masse de scellement liquide est en outre appliquée avec un racloir sur la surface de la carte, de sorte que le canal soit au moins partiellement rempli par la masse de scellement.
